# EUROPÄISCHE PATENTSCHRIFT

(11) **EP 3 792 080 B1**
(45) Veröffentlichungstag und Bekanntmachung des Hinweises auf die Patenterteilung: **22.02.2023**
(21) Anmeldenummer: 20192520.3
(22) Anmeldetag: 25.08.2020
(51) Int. Cl.: B60C 9/18, B60C 9/22

(54) **FAHRZEUGLUFTREIFEN**
PNEUMATIC TYRE
PNEUMATIQUE DE VÉHICULE

(30) Priorität: 16.09.2019 DE 102019214058
(43) Veröffentlichungstag der Anmeldung: 17.03.2021
(73) Patentinhaber: Continental Reifen Deutschland GmbH, 30165 Hannover (DE)
(72) Erfinder: Kramer, Thomas, 30419 Hannover (DE); Reese, Wolfgang, 30419 Hannover (DE)
(74) Vertreter: Continental Corporation

(56) Entgegenhaltungen:
- EP-A1- 2 829 419
- WO-A1-2015/171093
- DE-A1-102016 215 731
- US-A1- 2006 185 779

## Beschreibung

Die Erfindung betrifft einen Fahrzeugluftreifen mit einer Karkasse, einem Laufstreifen und einem Gürtel, welcher radial außen durch eine Gürtelbandage abgedeckt ist, wobei die Gürtelbandage zumindest abschnittsweise zwei oder mehr übereinander angeordnete Gürtelbandagenlagen aufweist, wobei jede Gürtelbandagenlage etwa in Umfangsrichtung angeordnete Festigkeitsträger aufweist und wobei die Festigkeitsträger mit Haftvermittler versehen und gummiert sind.

Es ist hinreichend bekannt, eine Gürtelbandage in Fahrzeugluftreifen anzuordnen. Die Gürtelbandage ist üblicherweise ein- oder mehrlagig ausgebildet, deckt zumindest die Gürtelränder ab und weist parallel und etwa in Umfangsrichtung verlaufende Festigkeitsträger in Form von in Gummi eingebetteten Corden auf. "Etwa in Umfangsrichtung" meint einen Winkel von 0° bis 5° in Bezug auf die Reifenumfangsrichtung.

Die Gürtelbandage wird bei der Reifenherstellung in Form von Lagen, Streifen oder Einzel-Festigkeitsträgern mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, also gummiert, indem eine Schar von im Wesentlichen parallel liegenden fadenförmigen Festigkeitsträgern, die zur besseren Haftung am einbettenden Gummi in einem der fachkundigen Person bekannten Art einem Dip-Prozess unterzogen sind, in Längsrichtung einen Kalander oder einen Extruder zur Ummantelung mit der Kautschukmischung durchläuft.

Die Gürtelbandage dient insbesondere im Hochgeschwindigkeitseinsatz dazu, eine Erhebung des Reifen durch die im Fahrbetrieb auftretenden Fliehkräfte zu begrenzen. Zudem sollen die Festigkeitsträger der Gürtelbandage die Gürtellagen, insbesondere die Gürtelkanten für die Schnelllauffestigkeit und Dauerhaltbarkeit niederhalten. Als Festigkeitsträgermaterialien werden insbesondere Polyamide und Polyester eingesetzt.

Das Gummieren der gedippten Festigkeitsträger, also das Einbetten der Festigkeitsträger in eine Kautschukmischung ist zeit- und materialaufwändig.

Aus diesem Grunde schlägt die EP 0 692 395 B1 einen Fahrzeugluftreifen mit einer Gürtelbandage vor, deren Festigkeitsträger aus einem Einfachgarn bestehen, mit einem Baumwoll- und Rayon-Schußfaden als Gewebe aufgebaut sind und das Gewebe ungummiert aber selbstklebend ausgestaltet ist. Diese selbstklebende Ausgestaltung des Gewebes ermöglicht einen sofortigen Halt beim Auflegen/ Wickeln während des Reifenbaus. Die aufwändige Behandlung des Gummierens des Gewebes mittels eines Kalanders entfallen. Der vergleichsweise hohe Materialaufwand an Kautschukmischung beim Gummieren entfällt.

Jedoch ist die selbstklebende Dip - Lösung sehr teuer und der Festigkeitsträger muss, um selbstklebend zu werden, etwa mit der doppelten Menge an Dip-Lösung überzogen werden, als übliche, nur mit üblichem Haftvermittler versehende Festigkeitsträger.

Weiter ist aus der US 2006/0185779 bekannt, Gewebe mit einer Leno-Bindung für die Gürtelbandage zu verwenden. Bei einer mehrlagigen Gürtelbandage wird zwischen zwei Gürtelbandagenlagen für eine bessere Bindung eine unvulkanisierte Gummilage platziert.

Aus der EP 2 829419 A1 ist ebenfalls eine Gürtelbandage mit zwei Gürtelbandagenlagen bekannt. Dabei besteht die Gürtelbandage über die Reifenbreite aus verschiedenen Abschnitten, wobei ein Mittenabschnitt andere Festigkeitsträger aufweist als zwei Seitenabschnitte.

In der DE 10 2016 215 731 A1 wird vorgeschlagen als Gürtelbandage einen bandartigen Träger zu verwenden, auf dem 5 bis 20 ungummierte Festigkeitsträger parallel und beabstandet zueinander angeordnet sind.

In der WO 2015/171093 A1 wird ein Gürtelbandagenstreifen beschrieben, der aus einem Gewebe besteht, dessen Garne mit Hilfe eines Klebstoffs fixiert werden.

Es ist die Aufgabe der vorliegenden Erfindung, einen Fahrzeugluftreifen mit einer Gürtelbandage bereitzustellen, durch welche der Fahrzeugluftreifen in seiner Herstellung kostengünstiger ist.

Gelöst wird die Aufgabe erfindungsgemäß dadurch, dass die Festigkeitsträger derjenigen Gürtelbandagenlage, welche durch eine oder mehrere weitere Gürtelbandagenlagen nach radial außen abgedeckt ist, mit dem Haftvermittler versehen sind, aber dass zumindest teilweise auf eine Gummierung dieser Festigkeitsträger verzichtet ist.

Erfindungswesentlich ist, dass die Festigkeitsträger der radial inneren Gürtelbandagenlage über die gesamte Gürtelbandagenlagenbreite - oder auch nur abschnittsweise - zwar mit einem üblichen Haftvermittler ausgestattet sind, aber keine Gummierung (Einbettung in eine Haftmischung) aufweisen. Die ungummierten Festigkeitsträger der radial inneren Gürtelbandagenlage sind unmittelbar auf der Gummierung (Haftmischung) der Gürtellage aufgebracht und werden mit einer weiteren Gürtelbandagenlage, welche gummiert ist, abgedeckt. Somit kommt die ungummierte radial innere Gürtelbandagenlage immer sowohl nach radial innen als auch nach radial außen jeweils mit einer Gummierung / Haftmischung in Kontakt. Ein direkter Kontakt von Festigkeitsträgern zweier Lagen - welches zu unerwünschten Frettingeffekten führen würde - ist vermieden.

Durch die Verwendung des üblichen Dip in üblicher Menge sind Kosten gegenüber selbstklebend gestalteten Festigkeitsträgern eingespart. Durch das Weglassen des Prozessschrittes der Gummierung ist an Zeit und an Material eingespart. Der Fahrzeugluftreifen ist durch das Weglassen der Gummierung in der radial inneren Gürtelbandagenlage zudem leichter, was sich positiv auf den Rollwiderstand des Fahrzeugluftreifens auswirkt.

Haftmischungen sind dem Fachmann hinreichend bekannt.

Eine "Haftmischung" ist eine Kautschukmischung, mit welcher die Festigkeitsträger zu einem Festigkeitsträger aufweisenden bandartigen Streifen oder zu einer Verstärkungslage ummantelt werden und welche mit der Haftschicht auf dem Festigkeitsträger eine ausreichend starke Verbindung in der Reifenvulkanisation eingehen kann. Dazu enthält die Mischung mindestens Schwefel als Vernetzer und gegebenenfalls Haftungspromotoren wie bspw. Resorcin und HMMM (Hexamethoxymethylmelamin).

Zweckmäßig ist es, wenn die Gürtelbandagenlagen gespult sind, wobei die gespulten, die Festigkeitsträger aufweisenden Streifen ein Breite von 5 bis 15 mm, vorzugsweise von 8 bis 12 mm, besonders bevorzugt von etwa 10 mm aufweisen. Durch diese Breiten wird zeiteffizient über die Lagenbreite gespult und der erwünschte Winkel der Festigkeitsträger zur Reifenumfangsrichtung von 0° bis 5° ist erhalten.

Vorteilhaft ist es, wenn die Festigkeitsträger der ungummierten Streifen Teil eines stabilen Gewebes, wie ein Gewebe mit einer Leno-Bindung sind. "Stabil" meint hierbei eine derartige "innere" Festigkeit des Gewebestreifens, dass dieser im Produktionsprozess seinen Gewebeverband beibehält.

Bei einem Gewebe mit Leno-Bindung sind die Festigkeitsträger Corde aus zwei oder mehr miteinander verdrehten Garnen und bilden die Kettfäden des Gewebes. Die Schußfäden sind derart zwischen den Garnen der Corde klemmend geführt, dass ein stabiler Gewebeverband entsteht.

Zweckmäßig ist es, wenn die Festigkeitsträger der gummierten Streifen Endlosfestigkeitsträger aufweisen. In einer weiteren Ausführung der Erfindung weisen die gummierten Streifen Festigkeitsträger in Form eines Gewebe auf. Das Gewebe ist entweder in Streifen geschnitten oder als Vollbandage in einem Stück über die gesamte Breite aufgelegt.

Vorteilhaft ist es, wenn die gummierten und die ungummierten Festigkeitsträger den gleichen Haftvermittler aufweisen. Dieses ist prozesstechnisch kostengünstig und einfach. Ein beispielhafter Haftvermittler ist ein Standard-RFL-Dip mit Voraktivierung, falls notwendig für PET und Aramid. Ebenfalls sind alternative Haftvermittler, wie bspw. Acrylharze einsetzbar.

In einer bestimmten Ausführung der Erfindung weist die Gürtelbandage die Konstruktion 2-2-2 auf, wobei die radial innere Lage die ungummierten Festigkeitsträger und die radial äußere Lage die gummierten Festigkeitsträger aufweist. Die ungummierte Lage hat nach radial oben und radial unten einen Kontakt zu einer Haftmischung.

In einer anderen bestimmten Ausführung der Erfindung weist die Gürtelbandage die Konstruktion 3-2-3 auf, wobei die radial innerste Lage die ungummierten Festigkeitsträger und die radial äußeren Lagen die gummierten Festigkeitsträger aufweisen. Die ungummierte Lage hat nach radial oben und radial unten einen Kontakt zu einer Haftmischung.

Bei den beiden vorgenannten Ausführungsformen 2-2-2 und 3-2-3 besteht - im Reifenquerschnitt betrachtet - die Gürtelbandage über ihre Breite aus drei Abschnitten, nämlich einem Mittenabschnitt (repräsentiert durch die mittlere Zahl der Dreier-Zahlenfolge) und zwei Seitenabschnitten (repräsentiert durch die linke und rechte Zahl der Dreier-Zahlenfolge), wobei ein Seitenabschnitt links und ein Seitenabschnitt rechts vom Mittenabschnitt angeordnet ist. Dabei entspricht die genannte Zahl der Anzahl der übereinander liegenden Gürtelbandagenabschnitten und die Aufzählung entspricht der Reihenfolge: Seitenabschnitt - Mittenabschnitt - Seitenabschnitt.

Die Konstruktion 2-2-2 bedeutet: 2 Lagen Seitenabschnitt - 2 Lagen Mittenabschnitt - 2 Lagen Seitenabschnitt.

Hierdurch ist die Gürtelbandage gut an die gewünschten Anforderungen im Fahrzeugluftreifen anzupassen.

## Patentansprüche

1. Fahrzeugluftreifen mit einer Karkasse, einem Laufstreifen und einem Gürtel, welcher radial außen durch eine Gürtelbandage abgedeckt ist, wobei die Gürtelbandage zumindest abschnittsweise zwei oder mehr übereinander angeordnete Gürtelbandagenlagen aufweist, wobei jede Gürtelbandagenlage etwa in Umfangsrichtung angeordnete Festigkeitsträger aufweist und wobei die Festigkeitsträger mit Haftvermittler versehen und gummiert sind,
**dadurch gekennzeichnet, dass**
die Festigkeitsträger derjenigen Gürtelbandagenlage, welche durch eine oder mehrere weitere Gürtelbandagenlagen nach radial außen abgedeckt ist, mit dem Haftvermittler versehen sind, aber dass auf eine Gummierung dieser Festigkeitsträger verzichtet ist.

2. Fahrzeugluftreifen nach Anspruch 1, **dadurch gekennzeichnet, dass** die Gürtelbandagenlagen gespult sind, wobei die gespulten, die Festigkeitsträger aufweisenden Streifen ein Breite von 5 bis 15 mm, vorzugsweise von 8 bis 12 mm, besonders bevorzugt von etwa 10 mm aufweisen.

3. Fahrzeugluftreifen nach Anspruch 2, **dadurch gekennzeichnet, dass** die Festigkeitsträger der ungummierten Streifen Teil eines Gewebes, wie eines Gewebes mit einer Leno-Bindung sind.

4. Fahrzeugluftreifen nach Anspruch 2 oder 3, **dadurch gekennzeichnet, dass** die Festigkeitsträger der gummierten Streifen ein Endlosfestigkeitsträger oder ein Gewebe sind.

5. Fahrzeugluftreifen nach einem oder mehreren der vorangehenden Ansprüche, **dadurch gekennzeichnet, dass** die gummierten und die ungummierten Festigkeitsträger den gleichen Haftvermittler aufweisen.

6. Fahrzeugluftreifen nach einem oder mehreren der vorangehenden Ansprüche, **dadurch gekennzeichnet, dass** die Gürtelbandage die Konstruktion 2-2-2 aufweist, wobei die Gürtelbandage über ihre Breite aus drei Abschnitten, nämlich einem Mittenabschnitt, repräsentiert durch die mittlere Zahl der Dreier-Zahlenfolge, und zwei Seitenabschnitten, repräsentiert durch die linke und rechte Zahl der Dreier-Zahlenfolge, besteht und die genannten Zahl der Anzahl der übereinander liegenden Gürtelbandagenabschnitte entspricht und wobei die radial innere Lage die ungummierten Festigkeitsträger und die radial äußere Lage die gummierten Festigkeitsträger aufweist.

7. Fahrzeugluftreifen nach einem oder mehreren der vorangehenden Ansprüche 1 bis 5, **dadurch gekennzeichnet, dass** die Gürtelbandage die Konstruktion 3-2-3 aufweist, wobei die Gürtelbandage über ihre Breite aus drei Abschnitten, nämlich einem Mittenabschnitt, repräsentiert durch die mittlere Zahl der Dreier-Zahlenfolge, und zwei Seitenabschnitten , repräsentiert durch die linke und rechte Zahl der Dreier-Zahlenfolge, besteht und die genannten Zahl der Anzahl der übereinander liegenden Gürtelbandagenabschnitte entspricht und wobei die radial innerste Lage die ungummierten Festigkeitsträger und die radial äußeren Lagen die gummierten Festigkeitsträger aufweisen.

## Claims

1. Pneumatic vehicle tyre having a carcass, a tread and a breaker belt, which is radially outwardly covered by a belt bandage, wherein at least sections of the belt bandage comprise two or more superposed belt bandage plies, wherein each belt bandage ply comprises reinforcing elements arranged approximately in the circumferential direction and wherein the reinforcing elements are provided with an adhesion promoter and rubberized,
**characterized in that**
the reinforcing elements of that belt bandage ply which is covered radially outwards by one or more further belt bandage plies are provided with the adhesion promoter, but these reinforcing elements are not rubberized.

2. Pneumatic vehicle tyre according to Claim 1, **characterized in that** the belt bandage plies are wound, wherein the wound strips comprising the reinforcing elements have a width of 5 to 15 mm, preferably of 8 to 12 mm, particularly preferably of approximately 10 mm.

3. Pneumatic vehicle tyre according to Claim 2, **characterized in that** the reinforcing elements of the unrubberized strips are part of a woven fabric, such as a woven fabric with a leno weave.

4. Pneumatic vehicle tyre according to Claim 2 or 3, **characterized in that** the reinforcing elements of the rubberized strips are a continuous reinforcing element or a woven fabric.

5. Pneumatic vehicle tyre according to one or more of the preceding claims, **characterized in that** the rubberized reinforcing elements and the unrubberized reinforcing elements comprise the same adhesion promoter.

6. Pneumatic vehicle tyre according to one or more of the preceding claims, **characterized in that** the belt bandage has the construction 2-2-2, wherein the belt bandage consists of three portions over its width, specifically a middle portion, represented by the middle number of the numerical sequence of three, and two side portions, represented by the left and right numbers of the numerical sequence of three, and the stated number corresponds to the number of superposed belt bandage portions and wherein the radially inner ply comprises the unrubberized reinforcing elements and the radially outer ply comprises the rubberized reinforcing elements.

7. Pneumatic vehicle tyre according to one or more of the preceding Claims 1 to 5, **characterized in that** the belt bandage has the construction 3-2-3, wherein the belt bandage consists of three portions over its width, specifically a middle portion, represented by the middle number of the numerical sequence of three, and two side portions, represented by the left and right numbers of the numerical sequence of three, and the stated number corresponds to the number of superposed belt bandage portions and wherein the radially innermost ply comprises the unrubberized reinforcing elements and the radially outer plies comprise the rubberized reinforcing elements.

## Revendications

1. Pneumatique de véhicule comprenant une carcasse, une bande de roulement et une ceinture qui est recouverte radialement à l'extérieur par un bandage de ceinture, le bandage de ceinture comportant au moins par portions deux couches de bandage de ceinture ou plus disposées l'une au-dessus de l'autre, chaque couche de bandage de ceinture comportant des renforts disposés à peu près dans la direction circonférentielle et les renforts étant pourvus de promoteurs d'adhérence et étant caoutchoutés,
**caractérisé en ce que**
les renforts de la couche de bandage de ceinture qui est recouverte radialement vers l'extérieur par une ou plusieurs autres couches de bandage de ceinture sont pourvus du promoteur d'adhérence, mais **en ce que** ces renforts ne sont pas caoutchoutés.

2. Pneumatique de véhicule selon la revendication 1, **caractérisé en ce que** les couches de bandage de ceinture sont enroulées, les bandes enroulées comportant les renforts ayant une largeur de 5 à 15 mm, de préférence de 8 à 12 mm, de manière particulièrement préférée d'environ 10 mm.

3. Pneumatique de véhicule selon la revendication 2, **caractérisé en ce que** les renforts des bandes non caoutchoutées font partie d'un tissu, tel qu'un tissu pourvu d'une armure de gaze.

4. Pneumatique de véhicule selon la revendication 2 ou 3, **caractérisé en ce que** les renforts des bandes caoutchoutées sont un renfort sans fin ou un tissu.

5. Pneumatique de véhicule selon une ou plusieurs des revendications précédentes, **caractérisé en ce que** les renforts caoutchoutés et non caoutchoutés comportent le même promoteur d'adhérence.

6. Pneumatique de véhicule selon une ou plusieurs des revendications précédentes, **caractérisé en ce que** le bandage de ceinture présente la construction 2-2-2, le bandage de ceinture comprenant sur sa largeur trois portions, à savoir une portion médiane représentée par le nombre médian de la séquence de trois nombres, et deux portions latérales, représentées par les nombres gauche et droit de la séquence de trois nombres, et ledit nombre correspondant au nombre de portions de bandage de ceinture superposées et la couche radialement intérieure comportant les renforts non caoutchoutés et la couche radialement extérieure comportant les renforts caoutchoutés.

7. Pneumatique de véhicule selon une ou plusieurs des revendications précédentes 1 à 5, **caractérisé en ce que** le bandage de ceinture présente la construction 3-2-3, le bandage de ceinture comprenant sur sa largeur trois portions, à savoir une portion médiane représentée par le nombre médian de la séquence de trois nombres, et deux portions latérales représentées par les nombres gauche et droit de la séquence de trois nombres,
et ledit nombre correspondant au nombre de portions de bandage de ceinture disposées l'une au-dessus de l'autre et la couche radialement la plus intérieure comportant les renforts non caoutchoutés et les couches radialement extérieures comportant les renforts caoutchoutés.
